# EUROPÄISCHE PATENTSCHRIFT

(11) **EP 2 716 192 B1**
(45) Veröffentlichungstag und Bekanntmachung des Hinweises auf die Patenterteilung: **12.08.2015**
(21) Anmeldenummer: 13405117.6
(22) Anmeldetag: 07.10.2013
(51) Int. Cl.: A47J 37/07

(54) **Wärmeausdehnungskompensierte Feuerstellenplatte**
Fireplace plate with compensed thermal dilatation
Plaque de foyer avec dilatation thermique compensée

(30) Priorität: 08.10.2012 CH 18892012
(43) Veröffentlichungstag der Anmeldung: 09.04.2014
(73) Patentinhaber: Nyffeler, Michael, 8600 Dübendorf (CH)
(72) Erfinder: Nyffeler, Michael, 8600 Dübendorf (CH)
(74) Vertreter: EGLI-EUROPEAN PATENT ATTORNEYS

(56) Entgegenhaltungen:
- US-A- 4 457 290
- US-A1- 2009 151 575

## Beschreibung

Die Erfindung bezieht sich auf eine Plattenelementeinrichtung, welche partikelundurchlässig und temperaturbeständig ausgebildet ist. Weiterhin bezieht sich die Erfindung auf eine Feuerstellenvorrichtung. Darüber hinaus bezieht sich die Erfindung auf ein Verfahren zur Herstellung einer Plattenelementeinrichtung bzw. einer Feuerstellenvorrichtung.

Offene Feuerstellen und Grills erfreuen sich einer grossen Beliebtheit. So werden solche Feuerstellen bzw. Grills gerne eingesetzt, um eine von vielen Menschen als angenehm empfundene Lagerfeueratmosphäre zu erzielen, bzw. zur Zubereitung von Speisen, meist Fleisch und Würsten, verwendet.

Insbesondere im häuslichen Garten-, Balkon- oder Terrassenbereich ist die Verwendung von festen Feuerstellen bzw. Grills aus Platzgründen meist unerwünscht oder gar nicht realisierbar. Stattdessen kommen hier portable Feuerstellen (zum Teil auch als Feuerschalen bekannt) und portable Gartengrills zum Einsatz.

Ein Problem bei den derzeit bekannten Gartengrills besteht im Zeitbedarf für die Zubereitung von Speisen, insbesondere wenn grössere Mengen an Grillgut zu garen ist. Das Garen der Speisen erfolgt beim Grillen in der Regel über heisser Glut, bei der keine (sichtbaren) Flammen mehr vorhanden sind.

Das bedeutet, dass zunächst mit dem Brennmaterial ein Feuer entfacht wird und man einige Zeit abwarten muss, bis die Flammen erloschen sind, und man mit dem eigentlichen Grillen beginnen kann. Noch problematischer ist es, wenn ein einzelner Feuerungsdurchgang nicht ausreicht, um das vorhandene Grillgut zu garen. Dann muss man, sobald die Glut nicht mehr zum Garen ausreichend ist, ein neues Feuer entzünden und erneut abwarten bis die Flammen erloschen sind, ehe man mit der Zubereitung der nächsten Grillgutcharge beginnen kann. Dieser Zeitverzug wird allgemein als überaus störend empfunden.

Es wurde bereits vorgeschlagen, (insbesondere feste) Feuerstellen bzw. Grills mit einer grossen Feuerungsfläche zu realisieren, so dass in einem Bereich ein Feuer entzündet werden kann, während in einem anderen Bereich über der Glut gegrillt werden kann. Dies wird jedoch durch die in der Regel konkave Formgebung bekannter Feuerungsflächen zum Teil deutlich erschwert. Das Brennmaterial rutscht dann nämlich immer zu einem zentralen Punkt hin.

Die Schaffung einer ebenen Fläche für die Feuerungsfläche wurde bislang im Stand der Technik vermieden, da aufgrund der funktionsbedingt starken Temperaturdifferenzen ein nicht vernachlässigbarer thermischer Verzug auftritt. Dieser führt beispielsweise bei einer anfänglich ebenen Ausgestaltung einer Feuerungsfläche bei Betriebstemperatur oftmals zu den bereits oben erwähnten nachteiligen konkaven oder auch zu konvexen Formgebungen. Auch kommt es durch die thermischen Verzüge und die damit einhergehenden mechanischen Spannungen zu einer nicht unerheblichen Materialermüdung.

Die geschilderten Probleme sind bei Vorrichtungen nach dem Stand der Technik insbesondere deshalb besonders problematisch und konstruktiv schwer beherrschbar, weil es nur in bestimmten Teilbereichen der Feuerungsfläche zu einer Temperaturerhöhung kommt. Darüber hinaus variieren sowohl Anzahl, als auch Ort der Teilbereiche, in denen es zu einer Temperaturerhöhung kommt.

Der vorliegenden Erfindung liegt daher die Aufgabe zugrunde, die im Stand der Technik bekannten Plattenelementeinrichtungen bzw. die im Stand der Technik bekannten Feuerstellen zu verbessern.

Diese Aufgabe wird durch eine Plattenelementeinrichtung nach dem unabhängigen Anspruch 1 gelöst.

Es wird vorgeschlagen, eine Plattenelementeinrichtung, welche partikelundurchlässig und temperaturbeständig ausgebildet ist, mit zumindest einer Längenverzugskompensationseinrichtung zur Kompensation thermisch bedingter Ausdehnungsvariationen von zumindest Bereichen des Plattenelements zu versehen. Die Längenverzugskompensationseinrichtung kann dabei grundsätzlich beliebig ausgeführt sein. Sie sollte jedoch derart ausgeführt sein, dass sie die Temperaturbeständigkeit und/oder die Partikelundurchlässigkeit der Plattenelementeinrichtung nicht beseitigt. Bevorzugt ist es dabei, wenn die Temperaturbeständigkeit und/oder die Partikelundurchlässigkeit der Plattenelementeinrichtung gegenüber dem Zustand ohne dem Vorhandensein der Längenverzugskompensationseinrichtung im Wesentlichen vollständig aufrechterhalten bleibt. Es kann jedoch durchaus von Vorteil sein, wenn sich zwar die Temperaturbeständigkeit und/oder die Partikelundurchlässigkeit der Plattenelementeinrichtung gegenüber dem "ursprünglichen" Zustand verschlechtert, jedoch noch in einem Ausmass erhalten bleibt, dass die Funktionstüchtigkeit der Plattenelementeinrichtung im Rahmen des vorgesehenen Eisatzgebiets (zumindest für realistischerweise zu erwartende Bedingungen) gegeben ist. Die (schlussendliche) Temperaturbeständigkeit und/oder die (schlussendliche) Partikelundurchlässigkeit der Plattenelementeinrichtung bemisst sich vorzugsweise am vorgesehenen Einsatzzweck. Beim Beispiel einer Verwendung als Plattenelementeinrichtung für eine Feuerstelle sollte also beispielsweise die Temperaturbeständigkeit derartig sein, dass die Plattenelementeinrichtung üblichen Holzfeuer-, Holzkohlefeuer- oder Kohlefeuertemperaturen ausgesetzt (gegebenenfalls auch indirekt ausgesetzt) werden kann. Dementsprechend sollte die Partikelundurchlässigkeit derartig ausgebildet sein, dass die Plattenelementeinrichtung gegenüber Brennelementstückchen und/oder Aschepartikeln und/oder Russpartikeln, die bei Holzfeuern, Holzkohlefeuern oder Kohlefeuer entstehen, undurchlässig ist. Rein beispielhaft sollte die Plattenelementeinrichtung temperaturbeständig bei Temperaturen von 500°C, 550°C, 600°C, 650°C, 700°C, 750°C, 800°C, 850°C, 900°C, 950°C, 1000°C, 1050°C, 1100°C, 1150°C, 1200°C, 1250°C, 1300°C, 1350°C, 1400°C, 1450°C, 1500°C, 1550°C oder 1600°C sein. Die Partikelundurchlässigkeit sollte rein beispielhaft derart sein, dass Partikel mit Durchmessern von 0,025 mm, 0,05 mm, 0,075 mm, 0,1 mm, 0,125 mm, 0,15 mm, 0,175 mm, 0,2 mm, 0,225 mm, 0,25 mm, 0,275 mm, 0,3 mm, 0,35 mm, 0,4 mm, 0,45 mm, 0,5 mm, 0,6 mm, 0,7 mm, 0,8 mm, 0,9 mm oder 1,0 mm im Wesentlichen sicher zurückgehalten werden. Unter "im Wesentlichen sicher" kann insbesondere ein statistischer Wert verstanden werden, derart, dass mehr als 99%, 99,25%, 99,5%, 99,6%, 99,7%, 99,8%, 99,9%, 99,925%, 99,5%, 99,6%, 99,7%, 99,8%, 99,9% oder 99,95% der Teilchen mit der entsprechenden Grösse zurückgehalten werden. Bei den zu kompensierenden Ausdehnungsvariationen kann es sich insbesondere um Längen-, Breiten- und Dickenänderungen handeln, aber auch durchaus um Torsionseffekte (so dass sich beispielsweise einzelne Segmente bzw. Bereiche der Plattenelementeinrichtung konvex bzw. konkav verformen können). Bevorzugt werden zumindest solche Bereiche des Plattenelements mit Längenverzugskompensationseinrichtungen versehen, dass thermisch bedingte Ausdehnungsvariationen von Bereichen, in denen üblicherweise mit brennendem Brennmaterial zu rechnen ist, ausreichend kompensiert werden können. Die Formgebung der Plattenelementeinrichtung kann grundsätzlich beliebig sein. Insbesondere ist an kreisrunde, ovalartige, elliptische, polygonartige, rechteckige, quadratische, rautenartige und trapezartige Formen (wobei die "eckigen" Formen auch mit abgerundeten Ecken versehen sein können) zu denken. Die Dimensionen der Plattenelementeinrichtung liegen vorzugsweise in einem Intervall zwischen 0 m, 0,1 m, 0,2 m, 0,3 m, 0,4 m, 0,5 m, 0,6 m, 0,7 m, 0,8 m, 0,9 m, 1 m, 1,25 m bzw. 1,5 m und 0,2 m, 0,3 m, 0,4 m, 0,5 m, 0,6 m, 0,7 m, 0,8 m, 0,9 m, 1 m, 1, 25 m, 1,5 m, 1,75 m, 2 m, 2,25 m, 2,5 m, 2,75 m, 3 m, 3,5 m bzw. 4 m. Bei der "Dimension" handelt es sich insbesondere um die typischerweise verwendeten geometrischen Grössenangaben. So kann es sich im Fall einer kreisrunden Ausbildung um den Durchmesser, im Falle einer rechteckartigen Ausbildung um eine der beiden (oder beide) Kantenlängen handeln. Die Dicke der Plattenelementeinrichtung beträgt typischerweise weniger als (oder gleich) 0,5 mm, 1,0 mm, 1,5 mm, 2,0 mm, 2,5 mm, 3,0 mm, 3,5 mm, 4 mm, 5 mm, 6 mm, 7 mm, 8 mm, 9 mm oder 10 mm.

Erfindungsgemäß ist bei der Plattenelementeinrichtung zumindest eine Längenverzugskompensationseinrichtung zumindest bereichsweise als partikelundurchlässige Ausnehmungseinrichtung ausgebildet. So kann es sich beispielsweise um Materialverjüngungen (beispielsweise durch Vorsehen von Nuten oder dergleichen) oder um durchgängige Ausnehmungen wie Durchgangslöcher, Schlitze, Perforationslinien und dergleichen handeln. Möglich ist es dabei, dass die Mehrzahl oder auch im Wesentlichen alle Längenverzugskompensationseinrichtungen als partikelundurchlässige Ausnehmungseinrichtung ausgebildet sind. Grundsätzlich sind jedoch auch anderweitige Ausbildungen der Längenverzugskompensationseinrichtung möglich, wie beispielsweise wannenartige oder dreieckartige Verformungsbereiche.

Erfindungsgemäß weist die partikelundurchlässige Ausnehmungseinrichtung zumindest bereichsweise eine schmale Schlitzeinrichtung auf und/oder ist zumindest bereichsweise als schmale Schlitzeinrichtung ausgebildet. Unter einer schmalen Schlitzeinrichtung ist insbesondere eine Schlitzeinrichtung mit einer (engsten) Breite von weniger als (oder gleich) 0,025 mm, 0,05 mm, 0,075 mm, 0,1 mm, 0,125 mm, 0,15 mm, 0,175 mm, 0,2 mm, 0,225 mm, 0,25 mm, 0,275 mm, 0,3 mm, 0,35 mm, 0,4 mm, 0,45 mm, 0,5 mm, 0,6 mm, 0,7 mm, 0,8 mm, 0,9 mm oder 1,0 mm zu verstehen. Die Schlitzeinrichtungen können sowohl durchgängig, als auch als Perforationseinrichtung ausgestaltet sein. Der Querschnitt der Schlitzeinrichtungen kann grundsätzlich eine beliebige Form aufweisen, weist aber aus herstellungstechnischen Gründen in der Regel einen im Wesentlichen rechteckigen Querschnitt auf.

Vorteilhaft ist es, wenn die Plattenelementeinrichtung zumindest bereichsweise als eben ausgebildete Plattenelementeinrichtung ausgebildet ist. In einem derartigen Fall kann ein "Rutschen" von in/auf der Plattenelementeinrichtung aufliegende Gegenständen (wie beispielsweise Brennmaterial) in der Regel weitestgehend unterbunden werden. Dies gilt in der Regel über einen insbesondere grossen Temperaturbereich hinweg (wie beispielsweise zwischen Zimmertemperatur und einer typischen Betriebstemperatur oder einer Temperatur, die der Temperaturbeständigkeit entspricht). Auch ansonsten kann eine zumindest bereichsweise ebene Ausbildung der Plattenelementeinrichtung von Vorteil sein, beispielsweise, indem sie besonders widerstandsfähig gegenüber einer mechanischen Krafteinwirkung ist. Schliesslich kann durch die ebene Ausbildung auch die Reinigung der Plattenelementeinrichtung verbessert werden.

Vorzugsweise ist die Plattenelementeinrichtung derart ausgebildet, dass zumindest Teile der Längenverzugskompensationseinrichtung ein geometrisches Muster ausbilden, insbesondere ein geometrisches Muster mit polygonartiger Anordnung und/oder mit radialartiger und/oder bogenartiger und/oder bogensegmentartiger Anordnung. Eine polygonartige Ausbildung bietet sich insbesondere im Falle einer polygonartigen Formgerbung der Plattenelementeinrichtung an, wohingegen sich eine radialartige und/oder bogenartige und/oder bogensegmentartige Anordnung bei einer kreisrunden, elliptischen, ovalartigen oder sonstigen "gerundeten" Form anbietet. Es ist im Übrigen darauf hinzuweisen, dass sich oftmals eine radialartige und/oder bogensegmentartige Anordnung sowie eine polygonartige Ausbildung lokal betrachtet weitgehend einander annähern.

Weiterhin wird vorgeschlagen, die Plattenelementeinrichtung mit einer zumindest bereichsweise segmentierten Ausbildung zu gestalten, wobei zumindest ein Teil der Segmente bevorzugt Längenverzugskompensationseinrichtungsfrei ausgebildet ist. Mit anderen Worten kann die Plattenelementeinrichtung als Zusammenstellung einer Vielzahl von einzelnen Segmenten betrachtet werden, die geeignet miteinander verbunden sind. Die einzelnen Segmente können dann ganz "normale", flächig durchgehende Platteneinrichtungen sein. Dadurch kann die Plattenelementeinrichtung besonders kostengünstig gefertigt werden. Aber auch die Funktionalität kann besonders vorteilhaft sein, beispielsweise weil eine besonders leichte Reinigungsmöglichkeit gegeben ist.

Erste Versuche haben ergeben, dass sich eine besonders vorteilhafte Ausbildungsform der Plattenelementeinrichtung ergibt, wenn zumindest einige der Segmente über stegartige Verbindungselemente, vorzugsweise einteilig mit der Plattenelementeinrichtung ausgebildete stegartige Verbindungselemente, besonders bevorzugt einstückig mit der Plattenelementeinrichtung ausgebildete stegartige Verbindungselemente miteinander verbunden sind.

Besonders vorteilhaft ist es, wenn die Plattenelementeinrichtung als vorzugsweise grossflächige Feuerstelleneinrichtung und/oder als vorzugsweise grossflächige Strahlungswärmedämmeinrichtung ausgebildet ist. In diesem Falle können sich die der Plattenelementeinrichtung immanenten Eigenschaften besonders vorteilhaft auswirken.

Eine weitere bevorzugte Ausführungsform der Plattenelementeinrichtung kann sich ergeben, wenn die Plattenelementeinrichtung zumindest bereichsweise ein metallisches Material aufweist und/oder zumindest bereichsweise aus einem metallischen Material ausgebildet ist. Metallische Materialien weisen eine in der Regel gute Bearbeitbarkeit, eine hohe Festigkeit, eine hohe Standzeit, eine gute Reinigbarkeit sowie eine hohe Temperaturbeständigkeit auf. Als metallische Materialien kommen insbesondere Metalle oder Metalllegierungen wie beispielsweise diverse Stähle in Betracht.

Vorteilhaft ist es weiterhin, wenn die Plattenelementeinrichtung mit zumindest einer Randerhöhungseinrichtung versehen ist. Diese kann beispielsweise als vorzugsweise vollständig umlaufende Stegeinrichtung ausgebildet sein. Insbesondere ist es vorteilhaft, wenn die Randerhöhungseinrichtung am äusseren Rand der Plattenelementeinrichtung oder benachbart hierzu angeordnet ist. Mit einer derartigen Randerhöhungseinrichtung ist es insbesondere möglich ein in der Regel unbeabsichtigtes Herunterrutschen von Brennmaterial wirksam zu unterbinden. Vorzugsweise sollte die Randerhöhungseinrichtung eine vergleichsweise niedrige Höhe von beispielsweise weniger als (oder gleich) 2 cm, 3 cm, 4 cm, 5 cm, 7 cm oder 10 cm aufweisen. Hierdurch kann das Feuer auch vorteilhaft zu den Seiten abstrahlen. Insbesondere um einen Windschutz zu erzielen kann die Randerhöhungseinrichtung auch (bereichsweise) eine grössere Höhe aufweisen. Dabei ist es auch möglich eine (zusätzliche) reversibel montierbare Randerhöhungseinrichtung (zumindest entlang eines Randbereichs) vorzusehen, die eine grössere Höhe als eine (gegebenenfalls vorhandene) fest angeordnete Randerhöhungseinrichtung aufweist.

Weiterhin wird eine Feuerstellenvorrichtung vorgeschlagen, die zumindest eine Plattenelementeinrichtung mit dem vorab beschriebenen Aufbau aufweist. Die Plattenelementeinrichtung kann dabei als Platte für die eigentliche Feuerstelle (also als Feuerstelleneinrichtung) ausgebildet sein. Alternativ oder zusätzlich kann die Plattenelementeinrichtung als Platte zur Realisierung einer Wärmedämmung gegenüber Strahlungswärme (also als Strahlungswärmedämmeinrichtung) ausgebildet sein. Die bereits beschriebenen Vorteile und Eigenschaften können dann auch zumindest in Analogie auf die Feuerstellenvorrichtung zutreffen.

Insbesondere wird vorgeschlagen, die Feuerstellenvorrichtung mit zumindest einer Rosteinrichtung zur Aufnahme von Grillgut zu versehen, wobei die Rosteinrichtung bevorzugt eine kleinere Fläche als die zumindest eine Plattenelementeinrichtung aufweist. Die resultierende Feuerstellenvorrichtung kann dann vorteilhaft auch als Grillvorrichtung verwendet werden. Durch die kleinere Ausbildung der Rosteinrichtung im Verhältnis zur Feuerstellenvorrichtung kann es ermöglicht werden, dass in einem Bereich der Feuerstellenvorrichtung ein Feuer entzündet wird (und damit Glut zum eigentlichen Grillen vorbereitet wird), während in einem anderen Bereich der Feuerstellenvorrichtung bereits Grillgut gegrillt wird. Auch wenn es durchaus möglich ist, die Rosteinrichtung fest zu installieren, so ist es vorteilhaft, wenn die Rosteinrichtung drehbar und/oder abnehmbar gestaltet ist. Mit einer derartigen Ausbildung ist es möglich, das Grillgut einfacher aufzulegen bzw. zu entnehmen. Auch kann eine derartige Grillvorrichtung (nach Abnahme des Grillrosts) auch vorteilhaft als "reine" Feuerstelle genutzt werden. Das für das Grillrost Gesagte kann im Übrigen in analoger Weise auch zusätzlich oder alternativ für eine Grillrosthalteeinrichtung gelten.

Schliesslich wird noch ein Verfahren zur Herstellung einer vorab beschriebenen Plattenelementeinrichtung und/oder zur Herstellung einer vorab beschriebenen Feuerstellenvorrichtung vorgeschlagen, bei dem zur Ausbildung zumindest einer Längenverzugskompensationseinrichtung, insbesondere zur Ausbildung von zumindest Teilen einer partikelundurchlässigen Ausnehmungseinrichtung ein Laserschneidverfahren und/oder ein Teilchenstrahlschneidverfahren und/oder ein fluiddynamisches Schneidverfahren, wie insbesondere ein Wasserstrahlschneidverfahren, genutzt wird. Als Teilchen für Teilchenschneidverfahren bieten sich insbesondere beschleunigte Elektronen und/oder Protonen an. Auch soll es möglich sein für eine derart hergestellte Plattenelementeinrichtung und/oder Feuerstellenvorrichtung gegenständlichen Schutz erhalten zu können.

Weitere Einzelheiten der Erfindung und insbesondere beispielhafte Ausführungsformen der vorgeschlagenen Vorrichtung und des vorgeschlagenen Verfahrens werden im Folgenden anhand der beigefügten Zeichnungen erläutert. Es zeigen:
- Fig. 1: ein erstes Ausführungsbeispiel für einen Gartengrill in einer schematischen, perspektivischen Ansicht;
- Fig. 2: ein erstes mögliches Ausführungsbeispiel für eine Feuerstellenplatte in schematischer Draufsicht von oben;
- Fig. 3: ein mögliches Ausführungsbeispiel für eine Wärmedämmplatte in schematischer Draufsicht von oben;
- Fig. 4: ein zweites Ausführungsbeispiel für einen Gartengrill in einer schematischen, perspektivischen Ansicht;
- Fig. 5: ein drittes Ausführungsbeispiel für einen Gartengrill in einer schematischen, perspektivischen Ansicht;
- Fig. 6: ein zweites Ausführungsbeispiel für eine Feuerstellenplatte in schematischer Draufsicht von oben.

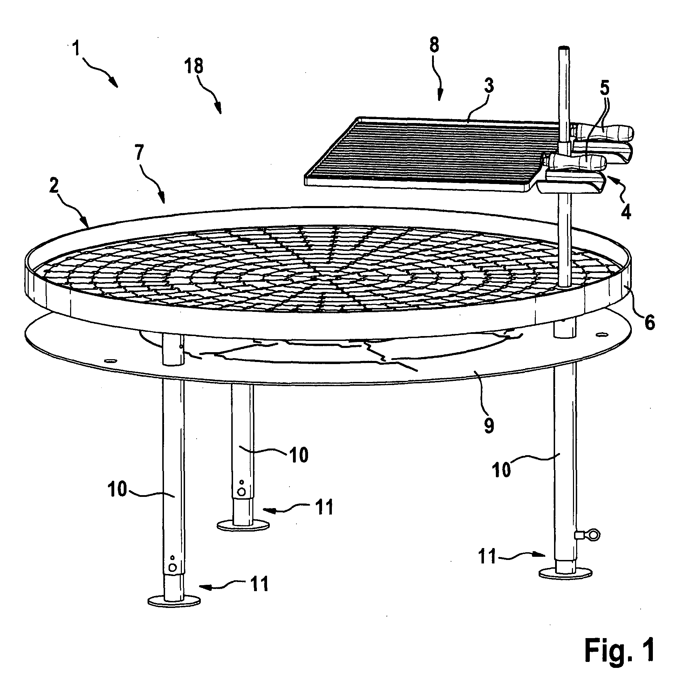

In Fig. 1 ist in einer schematischen perspektivischen Darstellung ein mögliches Ausführungsbeispiel für einen Gartengrill 1 in einer ersten Konfiguration 18 dargestellt, der auch gut zu einer einfachen offenen Feuerstelle umgebaut werden kann. Der Gartengrill 1 ist tragbar ausgeführt und eignet sich besonders gut zur Verwendung im häuslichen Garten, auf einem Balkon oder auf einer Terrasse.

Der Gartengrill 1 weist eine Feuerstellenplatte 2 auf, auf der das Brennmaterial (üblicherweise Holz oder Holzkohle) verbrannt werden kann. Über der hierdurch schlussendlich erzeugten Glut kann anschliessend das Grillgut gegart werden.

Zum Garen des Grillgutes dient der oberhalb der Feuerstellenplatte 2 angeordnete Grillrost 3. Der Grillrost 3 ist im vorliegend dargestellten Ausführungsbeispiel oberhalb der Feuerstellenplatte 2 abnehmbar an einer Grillrosthalterung 4 befestigt. Vorzugsweise ist die Grillrosthalterung 4 so ausgeführt, dass die Höhe des Grillrosts 3 über der Feuerstellenplatte 2 verstellt werden kann. Weiterhin ist der Grillrost 3 mit thermisch isolierenden Handgriffen 5 versehen, um die Handhabung des Grillrosts für den Benutzer des Gartengrills 1 zu erleichtern und um ihn gleichzeitig vor Verbrennungen zu schützen. Die Handgriffe 5 sind beispielsweise aus Holz gefertigt. Weiterhin ist der Grillrost 8 deutlich kleiner als die Feuerstellenplatte 2 ausgebildet. Vorliegend ist eine Kantenlänge des vorliegend im Wesentlichen quadratisch ausgebildeten Grillrosts 3 etwas kleiner als der Radius der Feuerstellenplatte 2 (und damit etwas kleiner als es der Hälfte des Durchmessers der Feuerstellenplatte 2 entspricht). Dadurch ist es möglich, zumindest zwei voneinander unabhängige Bereiche 7, 8 für Brennmaterial, Feuer bzw. Glut zu schaffen, worauf im Folgenden noch näher eingegangen wird.

Wird der Gartengrill 1 gemäß einer bevorzugten Ausführungsform mit einem abnehmbaren Grillrost 3 sowie einer entfernbaren Grillrosthalterung 4 ausgeführt, so kann der Gartengrill 1 (nach Entfernen von Grillrost 3 und Grillrosthalterung 4) als Feuerstelle benutzt werden (also als eine Art Feuerschale). Selbstverständlich ist auch an einen Vertrieb als "reine Feuerstelle" zu denken (wobei gegebenenfalls eine optionale Nachrüstmöglichkeit zum Gartengrill vorgesehen sein kann).

Die Feuerstellenplatte 2 ist mit einem umlaufenden Randsteg 6 versehen der ein versehentliches Herabfallen von Brennmaterial wirksam verhindert. Das Herabfallen von Brennmaterial ist insbesondere in brennendem Zustand unerwünscht und kann sogar gefährlich sein, insbesondere wenn sich der Gartengrill 3 auf temperaturempfindlichen Böden befindet.

Abgesehen vom Randsteg 6 ist die Feuerstellenplatte 2 eben ausgebildet. Dadurch ist es beispielsweise möglich, dass in einem ersten Bereich 7 der Feuerstellenplatte 2 ein Feuer entzündet wird (um dadurch Glut zum eigentlichen Grillen zu erzeugen). Dies kann unabhängig von einem zweiten Bereich 8, der sich unterhalb des Grillrosts 3 befindet, erfolgen. Dadurch ist es möglich, dass "vorzeitig" Glut vom Feuerbereich 7 in den Glutbereich 8 "abgezweigt" wird oder dass ein neues Feuer im Feuerbereich 7 entfacht wird, während bereits Glut im Glutbereich 8 liegt und damit Grillgut gegart wird. Es ist darauf hinzuweisen, dass der erste Bereich 7 (Feuerbereich) und der zweite Bereich 8 (Glutbereich) weder von der Funktion, noch von der Lage her bauartbedingt vorgegeben ist. Durch die flache, ebene Ausführung der Feuerstellenplatte 2 ist es darüber hinaus möglich, beispielsweise Glut besonders einfach zu bewegen, wie beispielsweise mit einem einfachen Stock. Bei bisherigen Gartengrills ist (falls es überhaupt möglich ist) spezielles Werkzeug, wie beispielsweise eine Metallschaufel, erforderlich.

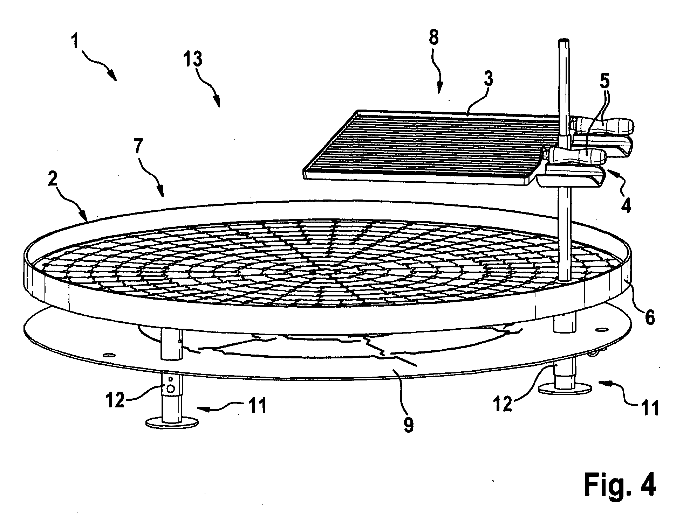

Unterhalb der Feuerstellenplatte 2 ist beim Gartengrill 1 in einem Abstand von vorliegend etwa 10 cm eine Wärmedämmplatte 9 vorgesehen. Diese dient der Abschattung von Strahlungswärme, die beim Betrieb des Gartengrills 1 von der Feuerstellenplatte 2 abgestrahlt wird. Dadurch ist es möglich, dass der Gartengrill 1 auch auf vergleichsweise temperaturempfindlichen Böden verwendet werden kann. Beispielsweise kann er auch auf Gras verwendet werden, ohne dass dieses verdorrt, selbst wenn der Gartengrill 1 in einer niedrigen Konfiguration 13 (vergleiche Fig. 4) betrieben wird.

In der in Fig. 1 dargestellten ersten Konfiguration 18 ist der Gartengrill 1 mit langen Stützen 10 versehen, so dass vorliegend die Feuerstellenplatte 2 in einer Höhe von etwa 60 cm und der Grillrost 3 in einer Höhe von etwa 90 cm zu liegen kommt, was eine für die meisten Menschen angenehme Arbeitshöhe darstellt.

Für eine Feinjustage - insbesondere auch um unebene Böden auszugleichen - können die Stützen 10 an ihrem jeweiligen unteren Ende durch eine Verstelleinrichtung 11 höhenjustiert werden. Es kann sich jedoch als ausreichend erweisen, wenn lediglich ein Teil der Stützen 10, insbesondere im Fall eines dreibeinigen Gartengrills 1 auch lediglich eine einzelne Stütze 10, höhenjustierbar ausgeführt ist.

Die Arbeitshöhe des Gartengrills 1 kann jedoch auch dadurch variiert werden, dass die langen Stützen 10 durch kurze Stützen 12 ausgetauscht werden, so dass sich die in Fig. 4 dargestellte niedrige, bodennahe Konfiguration 13 des Gartengrills 1 ergibt. Die bodennahe Konfiguration 13 des Gartengrills 1 kommt einem auf dem Boden platzierten Lagerfeuer gleich, was eine angenehme Atmosphäre erzeugen kann.

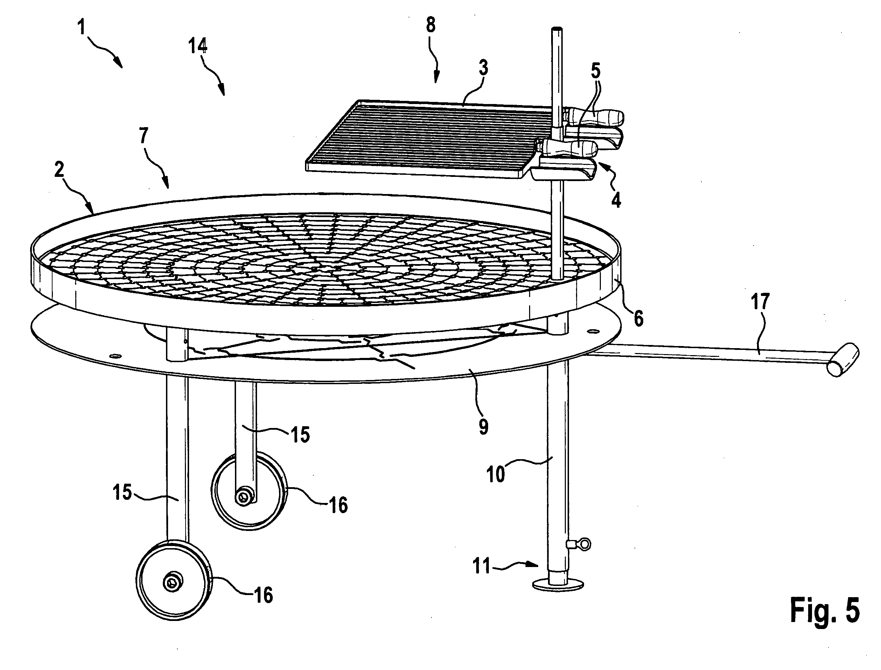

Weiterhin können zwei der langen Stützen 10 bzw. der kurzen Stützen 12 durch mit Rädern 16 versehene Räderstützen 15 ausgetauscht werden, so dass sich die in Fig. 5 gezeigte Rollkonfiguration 14 des Gartengrills 1 ergibt. Zur besseren Handhabung (Umplatzierung) des Gartengrills 1 in der Rollkonfiguration 14 ist in Fig. 5 am Gartengrill 1 eine Deichsel 17 vorgesehen. Die Deichsel 17 kann dabei in eine Handhabungsstellung (in Fig. 5 dargestellt) sowie in eine Verstaustellung gebracht werden. In der Handhabungsstellung kann der Gartengrill 1 mit der Deichsel 17 gezogen bzw. geschoben (gestossen) werden. In der Verstaustellung befindet sich die Deichsel 17 im Wesentlichen vollständig unterhalb der Wärmedämmplatte 9, so dass diese beim Grillen nicht stört. Denkbar ist es aber auch, dass die Deichsel 17 abnehmbar ausgeführt ist.

Selbstverständlich kann der Gartengrill 1 auch mit kurzen, mit Rädern 16 versehenen Stützen bestückt werden.

Die abnehmbaren Stützen haben den zusätzlichen Vorteil, dass der Gartengrills 1 besser verstaut werden kann (beispielsweise für eine Überwinterung). Zu diesem Zweck ist der Gartengrill 1 jedoch noch weiter zerlegbar. So kann im vorliegenden Ausführungsbeispiel die Feuerstellenplatte 2 von der Wärmedämmplatte 9 abgezogen werden. Auch der Grillrost 3 und die Grillrosthalterung 4 können abgenommen werden. Gegebenenfalls kann die Demontage auch erfolgen, damit der Gartengrill 1 (insbesondere die Feuerstellenplatte 2 und der Grillrost 3) leichter gereinigt werden können.

Die Stützen 10, 12, 15 können in beliebiger Weise als Einzelstützen ausgeführt werden, aber auch als miteinander verbundene Stützen-Baugruppe. So ist es beispielsweise möglich, dass die Stützen unter Verwendung von Querstangen miteinander verschweisst werden. Während im ersten Fall die Flexibilität des Gartengrills 1 erhöht werden kann, kann im zweiten Fall die Stabilität des Gartengrills 1 vergrössert werden.

Da die Feuerstellenplatte 2 an unterschiedlichen Stellen 7, 8 mit einer unterschiedlichen Anzahl von unterschiedlich grossen Feuerstellen versehen werden kann, kann es zu einer grossen Anzahl an unterschiedlichen Wärmeverzugsszenarien der Feuerstellenplatte 2 kommen. Dieser Wärmeverzug wiederum kann ohne entsprechende Gegenmassnahmen beispielsweise zu einer Ausbildung von konvexen und konkaven "Ausbeulungen" führen, was entsprechend nachteilig ist, insbesondere in Hinsicht auf das selbständige Verrutschen von Brennmaterial bzw. in Hinsicht auf das gewollte Verschieben von Brennmaterial (beispielsweise von Glut).

Von daher ist die Feuerstellenplatte 2 mit einer Vielzahl von dünnen Schlitzen 19 versehen (diese dienen also als Längenverzugskompensationseinrichtungen), die in einem bestimmten Muster angeordnet sind. Die dünnen Schlitze definieren somit eine Mehrzahl von Flächensegmenten 20, 26, die jeweils über Verbindungsstege 21 miteinander verbunden sind. Typischerweise liegt die Grössenordnung eines einzelnen Flächensegments 20 im Bereich von 5 cm, 10 cm, 15 cm oder 20 cm Kantenlänge.

Die Breite der dünnen Schlitze 19 ist so gewählt, dass diese vorzugsweise weder in kaltem Zustand (insbesondere bei Aussentemperatur), noch bei Betriebstemperatur Partikel hindurchlassen. Bei diesen Partikeln handelt es sich im Beispiel des vorliegend beschriebenen Gartengrills 1 um Aschepartikel und speziell um (noch glühende) Brennmaterialteilchen. Auf diese Weise können die Partikel nicht herabfallen, was zu Verschmutzungen und gegebenenfalls auch zu Beschädigungen der Stellfläche führen könnte. Der Randsteg 6 der Feuerstellenplatte 2 tut ein Übriges.

Dennoch ermöglichen es die dünnen Schlitze 19, dass der Wärmeverzug der durch eine Erhitzung eines oder mehrerer Flächensegmente 20, 26 auftritt durch Verbreiterung oder Verschmälerung des dünnen Spalts 19 aufgefangen werden kann. Die im Wesentlichen gleichmässig ebene Oberfläche der Feuerstellenplatte 2 wird dadurch nicht beeinträchtigt. Der Vollständigkeit halber sollte erwähnt werde, dass die einzelnen Flächensegmente 20, 26 durchaus eine Verformung infolge Hitzeverzugs aufweisen können. Dieser ist jedoch aufgrund der geringen Grösse der einzelnen Flächensegmente 20, 26 nur minimal.

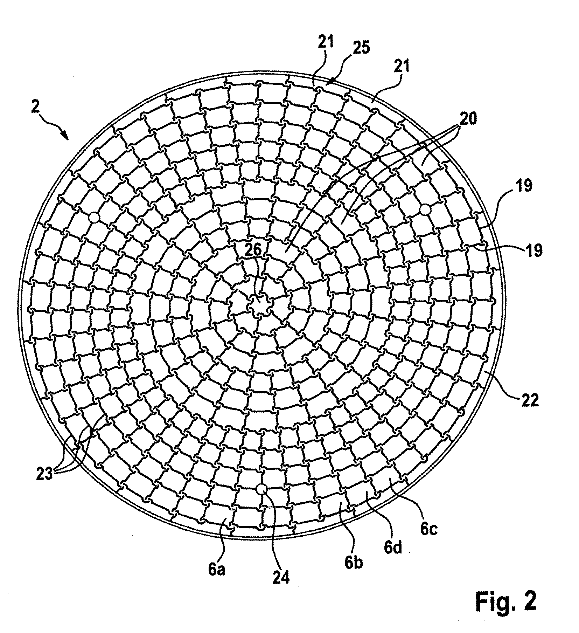

In Fig. 2 ist eine erste Anordnungsmöglichkeit für die dünnen Schlitze 19 in der vorliegend kreisförmig ausgebildeten Feuerstellenplatte 2 dargestellt. Wie man der Fig. entnehmen kann, ist in der Mitte ein einen Kreis annäherndes polygonartig ausgebildetes Zentralsegment 26 vorgesehen. Ausgehend von diesem Zentralsegment geht eine Mehrzahl von anfänglich sechs Radiallinien 6a aus. Entsprechend ergibt sich eine Anzahl von zunächst sechs ringsegmentartig geformten Flächensegmenten 20. Da aufgrund des zunehmenden Abstands vom Mittelpunkt der Feuerstellenplatte 2 die Umfangslänge der Flächensegmente 20 zunimmt, würde irgendwann eine Länge erreicht werden, mit der ein ausreichender Ausgleich eines thermischen Verzugs nicht mehr möglich wäre. Demzufolge wird mit zunehmendem radialen Abstand vom Mittelpunkt eine zunehmende Anzahl an Radiallinien 6a, 6b, 6c, 6d vorgesehen. Wie man weiterhin in Fig. 2 erkennen kann ist die Anzahl der Radiallinien 6 bei den aussen liegenden Aussensegmenten 22 im vorliegenden Ausführungsbeispiel wieder reduziert.

Ansonsten sind in Fig. 4 noch die Kreisbogenlinien 23 zu erkennen, die die Feuerstellenplatte 2 in Flächensegmente 20 von im Wesentlichen Gleicher radialer Kantenlänge unterteilt.

Schliesslich sind in der Feuerstellenplatte 2 noch Bohrungen 24 vorgesehen, die der Aufnahme bzw. Durchführung diverser Stützrohre dienen. Insbesondere ist es möglich, dass die Feuerstellenplatte 2 im Bereich der Bohrungen 24 unter Verwendung von Stützrohren oberhalb der Wärmedämmplatte 9 angeordnet werden kann. Weiterhin können die Bohrungen 24 dazu dienen, dass in diese Grillrost-Stützen (Grillrosthalterungen 4) eingesteckt werden. Durch die größere Anzahl an Bohrungen 24 ist es durchaus möglich, dass eine Mehrzahl an Grillrost-Stützen (und damit Grillrosten 3) verwendet wird. Bei "Nichtgebrauch" der Bohrungen 24 können diese durch Metallzapfen verschlossen werden, damit keine Glut durch die Bohrungen 24 hindurch auf den Boden fallen kann.

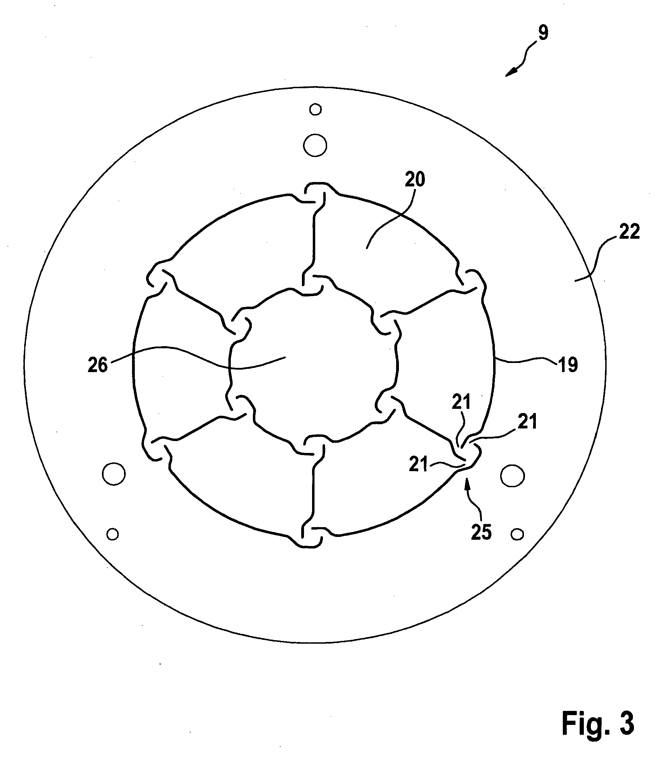

In Fig. 3 ist dargestellt, dass auch die Wärmedämmplatte 9 im vorliegenden Ausführungsbeispiel eines Gartengrills 1 eine zur Feuerstellenplatte 2 (Fig. 2) gleichartige Anordnung von dünnen Schlitzen 19 aufweisen kann. Da der Temperatureintrag in die Wärmedämmplatte 9 im Verhältnis zur Feuerstellenplatte 2 jedoch sowohl geringer, als auch gleichmässiger ist, sind weniger Schlitze 19 erforderlich, so dass die einzelnen Flächensegmente 20, 26 flächenmässig entsprechend grösser sind. Das Ringsegment 22 ist darüber hinaus überhaupt nicht in einzelne Teile unterteilt.

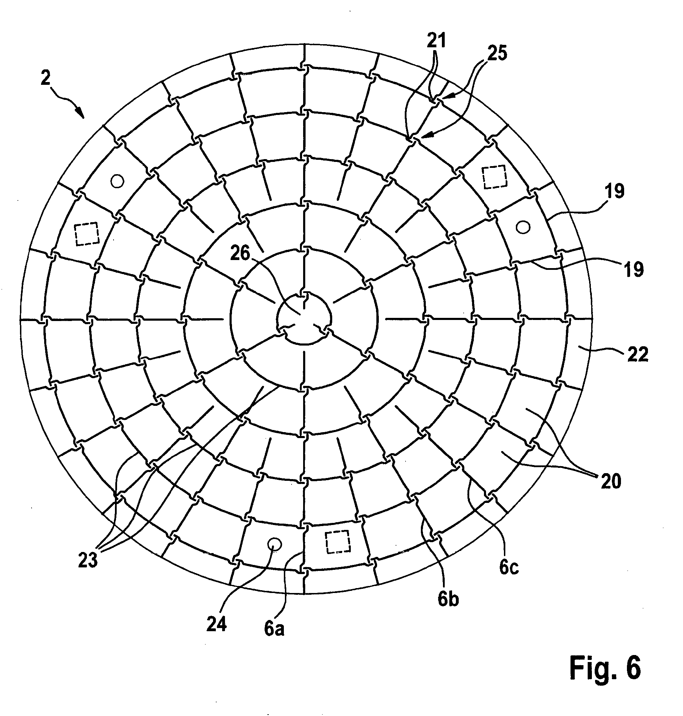

Der Vollständigkeit halber ist in Fig. 6 noch ein weiteres Ausführungsbeispiel für eine Feuerstellenplatte 2 dargestellt, bei der insgesamt -weniger Schlitze 19 vorgesehen sind. Dies kann sich anbieten, wenn die Feuerstellenplatte 2 eine kleinere Fläche aufweist, oder eine geringere Güte in Bezug auf Wärmeverzug aufweisen muss.

Die dünnen Schlitze 19 wurden beim dargestellten Ausführungsbeispiel mit einem hochenergetischen Laser geschnitten und weisen eine Breite von vorliegend 0,4 mm auf.

Besonders sollte auf die Ausbildung der Knotenpunkte 25 mit den einzelnen Verbindungsstegen 21 hingewiesen werden. Vorliegend sind die Verbindungsstege 21 (stegartige Verbindungselemente) seitlich versetzt zu den (verlängerten) dünnen Schlitzen 19 (Schlitzeinrichtungen/Längenverzugskompensationseinrichtungen) angeordnet. Dieser seitliche Versatz kann entweder teilweise oder vollständig (wie vorliegend dargestellt) sein. Mit anderen Worten verläuft der in Gedanken verlängerte Schlitz (noch) durch den Verbindungssteg 21 hindurch oder seitlich davon. In letzterem Fall kann der in Gedanken verlängerte Schlitz 19 im Wesentlichen eine Seitenlinie des Verbindungsstegs 21 bilden, oder aber auch beabstandet zur Seitenlinie des Verbindungsstegs 21 verlaufen. Mit der vorgeschlagenen Ausbildung können die Längenänderungen in den Knotenpunkten 25 vorteilhaft in Torsionsbewegungen umgesetzt werden, was mit vergleichsweise geringen Gegenkräften verbunden ist und auch die Materialermüdung reduzieren hilft. Möglich ist es darüber hinaus, dass die (bzw. zumindest einige der) verlängerten, seitlich versetzten dünnen Schlitze 19 in ihrem Endbereich mit einem abgebogenen Ende versehen werden. Diese Ausbildung soll im Übrigen auch unabhängig von dem dargestellten Ausführungsbeispiel des Gartengrills 1 beansprucht werden können.

## Patentansprüche

1. Plattenelementeinrichtung (2, 9) welche partikelundurchlässig und temperaturbeständig ausgebildet ist, **gekennzeichnet durch** zumindest eine Längenverzugskompensationseinrichtung (19, 25) zur Kompensation thermisch bedingter Ausdehnungsvariationen von zumindest Bereichen (7, 8, 20, 22, 26) des Plattenelements (2, 9), die zumindest bereichsweise als partikelundurchlässige Ausnehmungseinrichtung (19) ausgebildet ist, welche zumindest bereichsweise eine schmale Schlitzeinrichtung (19) aufweist und/oder zumindest bereichsweise als schmale Schlitzeinrichtung (19) ausgebildet ist.

2. Plattenelementeinrichtung (2, 9) nach Anspruch 1, **dadurch gekennzeichnet, dass** die Plattenelementeinrichtung (2, 9) zumindest bereichsweise als eben ausgebildete Plattenelementeinrichtung (2, 9) ausgebildet ist.

3. Plattenelementeinrichtung (2, 9) nach einem der vorangehenden Ansprüche, **dadurch gekennzeichnet, dass** zumindest Teile der Längenverzugskompensationseinrichtung (19, 25) ein geometrisches Muster ausbilden, insbesondere ein geometrieches Muster mit polygonartiger Anordnung und/oder mit radialartiger (6) und/oder bogenartiger (23) und/oder borgensegmentartiger Anordnung.

4. Plattenelementeinrichtung (2, 9) nach einem der vorangehenden Ansprüche, insbesondere nach Anspruch 3, **gekennzeichnet durch** eine zumindest bereichsweise segmentierte Ausbildung (20, 22, 26), wobei zumindest ein Teil der Segmente (20, 22, 26) bevorzugt Längenverzugskompensationseinrichtungsfrei ausgebildet ist.

5. Plattenelementeinrichtung (2, 9) nach Anspruch 4, **dadurch gekennzeichnet, dass** zumindest einige der Segmente (20, 22, 26) über stegartige Verbindungselemente (21), vorzugsweise einteilig mit der Plattenelementeinrichtung (2, 9) ausgebildete stegartige Verbindungselemente (21), besonders bevorzugt einstückig mit der Plattenelementeinrichtung (2, 9) ausgebildete stegartige Verbindungselemente (21) miteinander verbunden sind.

6. Plattenelementeinrichtung (2, 9) nach einem der vorangehenden Ansprüche, **dadurch gekennzeichnet, dass** sie als vorzugsweise grossflächige Feuerstelleneinrichtung (2) und/oder als vorzugsweise grossflächige Strahlungswärmedämmeinrichtung (9) ausgebildet ist.

7. Plattenelementeinrichtung nach einem der vorangehenden Ansprüche, **dadurch gekennzeichnet, dass** die Plattenelementeinrichtung (2, 9) zumindest bereichsweise ein metallisches Material aufweist und/oder zumindest bereichsweise aus einem metallischen Material ausgebildet ist.

8. Plattenelementeinrichtung (2, 9) nach einem der vorangehenden Ansprüche, **gekennzeichnet durch** zumindest eine Randerhöhungseinrichtung (6).

9. Feuerstellenvorrichtung (1), **gekennzeichnet durch** zumindest eine Plattenelementeinrichtung (2, 9) nach einem der Ansprüche 1 bis 8.

10. Feuerstellenvorrichtung (1) nach Anspruch 9, **gekennzeichnet durch** zumindest eine Rosteinrichtung (3) zur Aufnahme von Grillgut, welche bevorzugt eine kleinere Fläche als die zumindest eine Plattenelementeinrichtung (2, 9) aufweist.

11. Verfahren zur Herstellung einer Platteneinrichtung (2, 9) nach einem der Ansprüche 1 bis 8 und/oder einer Feuerstellenvorrichtung (1) nach einem der Ansprüche 9 oder 10, **dadurch gekennzeichnet, dass** zur Ausbildung zumindest einer Längenverzugskompensationseinrichtung (19, 25), insbesondere zur Ausbildung von zumindest Teilen einer partikelundurchlässigen Ausnehmungseinrichtung (19) ein Laserschneidverfahren und/oder ein Teilchenstrahlschneidverfahren und/oder ein fluiddynamisches Schneidverfahren, wie insbesondere ein Wasserstrahlschneidverfahren, genutzt wird.

## Claims

1. A plate element device (2, 9) with a particle-impermeable and temperature-resistant design, **characterized by** at least one longitudinal warping compensation device (19, 25) to compensate for thermally induced expansion variations in at least areas (7, 8, 20, 22, 26) of the plate element (2, 9), at least areas of which are designed as a particle-impermeable recessing device (19), at least areas of which exhibit a narrow slitting unit (19) and/or at least areas of which are designed as a narrow slitting unit (19).

2. The plate element device (2, 9) according to claim 1, **characterized in that** at least areas of the plate element device (2, 9) are designed as a planar plate element device (2, 9).

3. The plate element device (2, 9) according to one of the preceding claims, **characterized in that** at least parts of the longitudinal warping compensation device (19, 25) comprise a geometric pattern, in particular a geometric pattern with a polygonal arrangement and/or a radial (6) and/or curved (23) and/or curvedly segmented arrangement.

4. The plate element device (2, 9) according to one of the preceding claims, in particular according to claim 3, **characterized by** at least areas with a segmented configuration (20, 22, 26), wherein at least part of the segments (20, 22, 26) is preferably designed without a longitudinal warping compensation device.

5. The plate element device (2, 9) according to claim 4, **characterized in that** at least some of the segments (20, 22, 26) are joined together by means of web-like connecting elements (21), preferably web-like connecting elements (21) designed as one piece with the plate element device (2, 9), especially preferably web-like connecting elements (21) designed integrally with the plate element device (2, 9).

6. The plate element device (2, 9) according to one of the preceding claims, **characterized in that** it is designed as preferably a large-surface fireplace fixture (2) and/or designed as preferably a large-surface radiant heat insulation device (9).

7. The plate element device (2, 9) according to one of the preceding claims, **characterized in that** at least areas of the plate element device (2, 9) exhibit a metal material and/or at least areas thereof are formed out of a metal material.

8. The plate element device (2, 9) according to one of the preceding claims, **characterized by** at least one edge elevating device (6).

9. A fireplace fixture (1), **characterized by** at least one plate element device (2, 9) according to one of claims 1 to 8.

10. The fireplace fixture (1) according to claim 9, **characterized by** at least one grate system (3) for accommodating grilling products, which preferably exhibits a smaller surface than the at least one plate element device (2, 9).

11. A method for manufacturing a plate device (2, 9) according to one of claims 1 to 8 and/or a fireplace fixture (1) according to one of claims 9 or 10, **characterized in that** a laser cutting method and/or a particle radiation cutting method and/or a fluid dynamic cutting method, such as in particular a water jet cutting method, is used to create at least one longitudinal warping compensation device (19, 25), in particular to create at least parts of a particle-impermeable recessing device (19).

## Revendications

1. Dispositif (2, 9) d'éléments en plaques lequel est conçu en étant imperméable aux particules et thermorésistant, **caractérisé par** au moins un dispositif de compensation (19, 25) de l'étirage longitudinal pour la compensation de variations de dilatation dues à la température d'au moins des zones (7, 8, 20, 22, 26) de l'élément en plaques (2, 9) qui au moins par zones est conçu en tant que dispositif à évidements (19) imperméable aux particules, lequel comporte au moins par zones un étroit dispositif à encoches (19) et/ou est conçu au moins par zones en tant qu'étroit dispositif à encoches (19).

2. Dispositif (2, 9) d'éléments en plaques selon la revendication 1, **caractérisé en ce que** le dispositif (2, 9) d'éléments en plaques est conçu au moins par zones en tant que dispositif (2, 9) d'éléments en plaques plan.

3. Dispositif (2, 9) d'éléments en plaques selon l'une quelconque des revendications précédentes, **caractérisé en ce qu'**au moins des parties du dispositif de compensation (19, 25) de l'étirage longitudinal forment un motif géométrique, notamment un motif géométrique avec un agencement de type polygonal et/ou un agencement de type radial (6) et/ou de type curviligne (23) et ou de type de segment de courbe.

4. Dispositif (2, 9) d'éléments en plaques selon l'une quelconque des revendications précédentes, notamment selon la revendication 3, **caractérisé par** une conception segmentée (20, 22, 26) au moins par zones, au moins une partie des segments (20, 22, 26) étant conçue de préférence libre de dispositif de compensation d'étirage longitudinal.

5. Dispositif (2, 9) d'éléments en plaques selon la revendication 4, **caractérisé en ce qu'**au moins certains des segments (20, 22, 26) sont reliés les uns aux autres par l'intermédiaire d'éléments de liaison (21) de type barrettes, de préférences d'éléments de liaison (21) de type barrettes conçus en monobloc avec le dispositif (2, 9) d'éléments en plaques, de manière particulièrement préférée d'éléments de liaison (21) de type barrettes conçus d'un seul tenant avec le dispositif (2, 9) d'éléments en plaques.

6. Dispositif (2, 9) d'éléments en plaques selon l'une quelconque des revendications précédentes, **caractérisé en ce qu'**il est conçu en tant que dispositif pour foyer (2) de préférence à grande surface et/ou en tant que dispositif d'isolation de la chaleur radiante (9), de préférence à grande surface.

7. Dispositif (2, 9) d'éléments en plaques selon l'une quelconque des revendications précédentes, **caractérisé en ce que** le dispositif (2, 9) d'élément en plaques comporte au moins par zones une matière métallique et/ou est conçu au moins par zones en une matière métallique.

8. Dispositif (2, 9) d'éléments en plaques selon l'une quelconque des revendications précédentes, **caractérisé par** au moins un dispositif de rehaussement (6) des bords.

9. Dispositif (1) pour foyer selon l'une quelconque des revendications précédentes, **caractérisé par** au moins un dispositif (2, 9) d'élément en plaques selon l'une quelconque des revendications 1 à 8.

10. Dispositif pour foyer (1) selon la revendication 9, **caractérisé par** au moins un dispositif de grille (3) destiné à recevoir des produits à griller, lesquels présentent de préférence une surface inférieure à l'au moins un dispositif (2, 9) d'éléments en plaques.

11. Procédé destiné à fabriquer un dispositif (2, 9) d'élément en plaques selon l'une quelconque des revendications 1 à 8 et/ou un dispositif pour foyer (1) selon l'une quelconque des revendications 9 ou 10, **caractérisé en ce que** pour la conception d'au moins un dispositif de compensation (19, 25) d'étirage longitudinal, notamment pour la conception d'au moins des parties d'un dispositif à encoches (19) imperméable aux particules, on utilise un procédé de découpe au laser et/ou un procédé de découpe à faisceau de particules et/ou un procédé de découpe hydrodynamique, comme notamment un procédé de découpe au jet d'eau.
